# EUROPÄISCHE PATENTSCHRIFT

(11) **EP 2 670 799 B1**
(45) Veröffentlichungstag und Bekanntmachung des Hinweises auf die Patenterteilung: **13.07.2016**
(21) Anmeldenummer: 12702233.3
(22) Anmeldetag: 31.01.2012
(51) Int. Cl.: C08K 5/13, C08K 5/375, C09J 175/04, C08L 71/02, C08L 75/04

(54) **HÄRTBARE ZUSAMMENSETZUNG MIT KOMBINIERTEN STABILISATOREN**
CURABLE COMPOSITION HAVING COMBINED STABILISERS
COMPOSITION DURCISSABLE AYANT UNE COMBINAISON DE STABILISATEURS

(30) Priorität: 01.02.2011 DE 102011003425
(43) Veröffentlichungstag der Anmeldung: 11.12.2013
(73) Patentinhaber: Henkel AG & Co. KGaA, 40589 Düsseldorf (DE)
(72) Erfinder: LÜCKERT, Jens, 30890 Barsinghausen (DE); KOHL, Matthias, 69469 Weinheim (DE); PRÖBSTER, Manfred, 69226 Nußloch (DE)
(86) Internationale Anmeldenummer: PCT/EP2012/051529
(87) Internationale Veröffentlichungsnummer: WO 2012/104287

(56) Entgegenhaltungen:
- EP-A1- 2 053 092
- WO-A1-2010/139611
- DATABASE WPI Week 200241, Derwent Publications Ltd., London, GB; AN 2002-374733 -& JP 2001 310988 A (NIPPON ELASTOMER KK) 06 November 2001

## Beschreibung

Die vorliegende Erfindung betrifft das Gebiet der härtbaren Zusammensetzungen, wie sie beispielsweise in Kleb-, Dicht- und Beschichtungsstoffen verwendet werden. Insbesondere betrifft die Erfindung feuchtigkeitshärtbare Zusammensetzungen auf Basis silanterminierter Polymere und schlägt den Zusatz einer speziellen Kombination von Substanzen zur Verbesserung der Temperaturstabilität vor. Die Erfindung betrifft ferner die Verwendung der Substanzkombination zur Verbesserung der Temperaturstabilität härtbarer Zusammensetzungen sowie die Verwendung der Zusammensetzungen als Kleb-, Dicht- und/oder Beschichtungsstoff.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten silanmodifizierten Kleb- und Dichtstoffe eingesetzt worden. Gegenüber den Polyurethan-Kleb- und Dichtstoffen weisen die silanmodifizierten Kleb- und Dichtstoffe den Vorteil auf, dass sie frei von Isocyanatgruppen, insbesondere von monomeren Diisocyanaten, sind. Ferner zeichnen sie sich durch ein breites Haftspektrum auf einer Vielzahl von Substraten ohne Oberflächenvorbehandlung durch Primer aus.

Polymersysteme, die über reaktive Silylgruppen verfügen, sind also prinzipiell bekannt. In Gegenwart von Luftfeuchtigkeit sind Polymere, die über Silylgruppen mit hydrolysierbaren Substituenten verfügen, bereits bei Raumtemperatur in der Lage, unter Abspaltung der hydrolysierten Reste miteinander zu kondensieren. Je nach Gehalt an Silylgruppen mit hydrolysierbaren Substituenten und dem Aufbau dieser Silylgruppen bilden sich dabei hauptsächlich langkettige Polymere (Thermoplaste), relativ weitmaschige, dreidimensionale Netzwerke (Elastomere) oder hochvernetzte Systeme (Duroplaste). Die Polymere weisen in der Regel ein organisches Grundgerüst auf, das an den Enden zum Beispiel Alkoxy- oder Acyloxysilylgruppen trägt. Bei dem organischen Grundgerüst kann es sich beispielsweise um Polyurethane, Polyester, Polyether etc. handeln.

Polymere mit Silylgruppen an den Termini oder in einer Seitenkette werden beispielsweise in EP 1 396 513 A1 beschrieben. Die hydrolysierbare Substituenten aufweisenden Silylgruppen werden der Schrift zufolge durch Addition eines Hydrosilans an endständige Doppelbindungen des Gerüstpolymers, durch Reaktion von Isocyanatosilanen mit Hydroxylgruppen des Polymers, durch Umsetzung von aktive Wasserstoffatome enthaltenden Silanen mit Isocyanat-funktionalisierten Polymeren oder durch Reaktion von Mercaptosilanen mit endständigen Doppelbindungen des Polymers eingeführt. Die Polymere sind Bestandteil von Zusammensetzungen, die als Kleb- oder Dichtstoffe verwendet werden.

Auch EP 1 535 940 A1 beschreibt ein Verfahren zur Herstellung vernetzbarer Massen, wobei in einem ersten Schritt organyloxysilylterminierte Polymere durch Umsetzung dihydroxyterminierter Polymere mit

Isocyanato-funktionellen Silanen hergestellt werden und diese in einem zweiten Schritt mit Silan-Kondensationskatalysator und gegebenenfalls weiteren Stoffen vermischt werden.

Eine härtbare Zusammensetzung auf Basis von Silylgruppen, die durch Siloxan-Bindungsbildung vernetzen können, ist auch Gegenstand von EP 1 930 376 A1, wobei als weiterer Bestandteil eine Aminverbindung als Silanol-Kondensationskatalysator aufgeführt wird.

Eine vernetzbare polymere Zusammensetzung auf Basis silanterminierter Polymere, die im Polymerrückgrat gemischte Oxyalkyleneinheiten aufweisen, wird in WO 2005/047394 A1 beschrieben.

Die Ansprüche an die Dauertemperaturbeständigkeit von Kleb-, Dicht- und Beschichtungsstoffen werden immer höher. Als Beispiel sei die Solarindustrie genannt. Es besteht somit ein anhaltender Bedarf an temperaturbeständigen, zur Verwendung als Kleb-, Dicht- und/oder Beschichtungsstoff geeigneten Zusammensetzungen, die zudem eine Reihe weiterer, im Anwendungsgebiet geforderter Eigenschaften aufweisen.

Aufgabe der vorliegenden Erfindung ist es daher, eine härtbare Zusammensetzung zur Verfügung zu stellen, die unter toxikologischen Gesichtspunkten weitgehend unbedenklich angewendet werden kann, gute Elastizitätseigenschaften und ein breites Haftspektrum aufweist und sich insbesondere durch eine sehr gute Dauertemperaturbeständigkeit nach Aushärtung auszeichnet. Darüber hinaus soll die Zusammensetzung auch allen weiteren üblichen Anforderungen an einen modernen Kleb-, Dicht- und/oder Beschichtungsstoff genügen.

Überraschend hat sich gezeigt, dass diese Aufgabe durch den Einsatz einer spezifischen Kombination bestimmter phenolischer Verbindungen in einer Zusammensetzung auf Basis silylterminierter Polymere gelöst wird. Gegenstand der Erfindung ist daher eine härtbare Zusammensetzung, die mindestens
A) mindestens ein Polymer mit mindestens einer Endgruppe der allgemeinen Formel (I)

   -Aₙ-R-SiXYZ (I),

   worin
   A eine zweibindige, mindestens ein Heteroatom enthaltende Bindegruppe ist,
   R ein zweibindiger Kohlenwasserstoffrest mit 1 - 12 C-Atomen ist, und
   X, Y, Z Substituenten am Si-Atom und unabhängig voneinander C₁ - C₈ - Alkyl-, C₁ - C₈ - Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist, und
   n 0 oder 1 ist;
B) mindestens eine Verbindung der allgemeinen Formel (II) 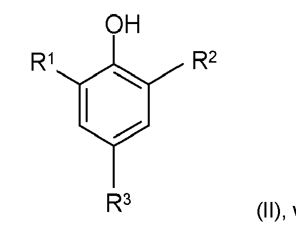 worin R¹, R² und R³ unabhängig voneinander unsubstituierte Alkylreste oder mindestens ein Heteroatom enthaltende und mindestens 10 C-Atome umfassende organische Reste sind, wobei die Reste R¹, R² und R³ frei von Thioethergruppen sind; und
C) mindestens eine Verbindung der allgemeinen Formel (III) 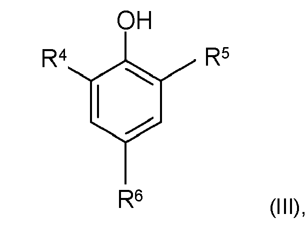 worin
   R⁴, R⁵ und R⁶ unabhängig voneinander unsubstituierte Alkylreste oder lineare, mindestens eine Thioether-Gruppe enthaltende Alkylreste sind, wobei mindestens einer der Reste R⁴, R⁵ und R⁶ ein linearer, mindestens eine Thioethergruppe enthaltender Alkylrest ist, enthält.

Unter einer "Zusammensetzung" wird im Rahmen der vorliegenden Erfindung ein Gemisch von mindestens zwei Inhaltsstoffen verstanden.
Der Begriff "härtbar" ist dahingehend zu verstehen, dass die Zusammensetzung unter dem Einfluss äußerer Bedingungen, insbesondere unter dem Einfluss in der Umgebung vorhandener und/oder bewusst zugeführter Feuchtigkeit aus einem relativ weichen, gegebenenfalls plastisch verformbaren Zustand in einen härteren Zustand übergehen kann. Allgemein kann die Vernetzung durch chemische und/oder physikalische Einflüsse erfolgen, neben der bereits erwähnten Feuchtigkeit also beispielsweise auch durch Zuführung von Energie in Form von Wärme, Licht oder sonstiger elektromagnetischer Strahlung, aber auch durch einfaches Inkontaktbringen der Zusammensetzung mit Luft oder einer reaktiven Komponente.

Das vorstehend unter A) aufgeführte Polymer mit mindestens einer Endgruppe der allgemeinen Formel (I) ist bevorzugt ein Polyether oder ein Poly(meth)acrylsäureester.

Unter einem Polyether wird ein Polymer verstanden, dessen organische Wiederholungseinheiten Ether-Funktionalitäten C-O-C in der Hauptkette enthalten. Nicht zu den Polyethern werden damit Polymere mit seitenständigen Ether-Gruppen gerechnet, wie zum Beispiel die Celluloseether, Stärkeether und Vinylether-Polymere. Auch Polyacetale wie das Polyoxymethylen (POM) werden im Allgemeinen nicht zu den Polyethern gezählt.

Unter einem Poly(meth)acrylsäureester wird ein Polymer auf der Basis von (Meth)acrylsäureestern verstanden, das daher als Wiederholungseinheit das Strukturmotiv-CH₂-CR^{a}(COOR^{b})- aufweist, worin R^{a} für ein Wasserstoffatom (Acrylsäureester) oder für eine Methylgruppe (Methacrylsäureester) steht und R^{b} für lineare, verzweigte, cyclische und/oder auch funktionelle Substituenten enthaltende Alkylreste, beispielsweise für Methyl-, Ethyl-, Isopropyl-, Cyclohexyl, 2-Ethylhexyl-, oder 2-Hydroxyethylreste steht.

Besonders bevorzugt ist das Polymer mit mindestens einer Endgruppe der allgemeinen Formel (I) ein Polyether. Polyether weisen eine flexible und elastische Struktur auf, mit der man Zusammensetzungen herstellen kann, die hervorragende elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Vorzugsweise beträgt das zahlenmittlere Molekulargewicht Mₙ des dem Polymer bevorzugt zugrunde liegenden Polyethers 2.000 bis 100.000 g/mol (Dalton), wobei das Molekulargewicht besonders bevorzugt mindestens 6.000 g/mol und insbesondere mindestens 8.000 g/mol beträgt. Zahlenmittlere Molekulargewichte von mindestens 2.000 g/mol sind vorteilhaft für die Polyether der vorliegenden Erfindung, weil erfindungsgemäße Zusammensetzungen auf der Basis von Polyethern mit einem solchen Mindestmolekulargewicht signifikante Film bildende Eigenschaften aufweisen. Beispielsweise beträgt das zahlenmittlere Molekulargewicht Mₙ des Polyethers 4.000 bis 100.000, vorzugsweise 8.000 bis 50.000, besonders bevorzugt 10.000 bis 30.000, insbesondere 10.000 bis 25.000 g/mol. Diese Molekulargewichte sind besonders vorteilhaft, da die entsprechenden Zusammensetzungen ein ausgewogenes Verhältnis von Viskosität (leichte Verarbeitbarkeit), Festigkeit und Elastizität aufweisen.

Besonders vorteilhafte viskoelastische Eigenschaften lassen sich erreichen, wenn man Polyether, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Auf diese Art hergestellte Polyether zeichnen sich durch eine besonders enge Molmassenverteilung, durch eine hohe mittlere Molmasse und durch eine sehr niedrige Zahl an Doppelbindungen an den Enden der Polymerketten aus.
In einer speziellen Ausführungsform der vorliegenden Erfindung beträgt die maximale Polydispersität M_{w}/Mₙ des dem Polymer zugrunde liegenden Polyethers daher 3, besonders bevorzugt 1,7 und ganz besonders bevorzugt 1,5.

Unter dem Molekulargewicht Mₙ wird das zahlenmittlere Molekulargewicht des Polymeren verstanden. Dieses wird, ebenso wie das gewichtsmittlere Molekulargewicht M_{w}, erfindungsgemäß durch Gelpermeationschromatographie (GPC, auch: SEC) bei 23°C unter Verwendung eines Styrolstandards bestimmt. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Das Verhältnis M_{w}/Mₙ (Polydispersität) gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Eine geringe Polydispersität von beispielsweise kleiner als 1,5 deutet auf eine vergleichsweise enge Molekulargewichtsverteilung und damit auf die spezifische Ausprägung mit dem Molekulargewicht zusammenhängender Eigenschaften, wie zum Beispiel der Viskosität, hin. Insbesondere weist daher im Rahmen der vorliegenden Erfindung der dem Polymer A zugrunde liegende Polyether eine Polydispersität (M_{w}/Mₙ) von kleiner als 1,3 auf.

Das mindestens eine Polymer der erfindungsgemäßen härtbaren Zusammensetzung weist mindestens eine Endgruppe der allgemeinen Formel (I)

-Aₙ-R-SiXYZ (I),

worin A eine zweibindige, mindestens ein Heteroatom enthaltende Bindegruppe ist, R ein zweibindiger Kohlenwasserstoffrest mit 1 - 12 C-Atomen ist, und X, Y, Z Substituenten am Si-Atom und unabhängig voneinander C₁ - C₈ - Alkyl-, C₁ - C₈ - Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist, und n 0 oder 1 ist, auf.

Dabei wird unter der zweibindigen oder bivalenten, mindestens ein Heteroatom enthaltenden Bindegruppe A eine zweibindige chemische Gruppe verstanden, die das Polymergerüst des alkoxy- und/oder acyloxysilanterminierten Polymers mit dem Rest R der Endgruppe verknüpft. Die zweibindige Bindegruppe A kann beispielsweise bei der Herstellung des alkoxy- und/oder acyloxysilanterminierten Polymers ausgebildet werden, zum Beispiel als Amid- beziehungsweise Urethangruppe durch die Reaktion eines mit Hydroxygruppen funktionalisierten Polyethers mit einem Isocyanatosilan. Dabei kann die bivalente Bindegruppe von im zugrunde liegenden Polymergerüst auftretenden Strukturmerkmalen sowohl unterscheidbar als auch nicht unterscheidbar sein. Letzteres liegt beispielsweise vor, wenn sie mit den Verknüpfungspunkten der Wiederholungseinheiten des Polymergerüsts identisch ist.

Der Index "n" entspricht 0 (Null) oder 1, das heißt die zweibindige Bindegruppe A verknüpft das Polymergrundgerüst mit dem Rest R (n = 1) oder das Polymergerüst ist direkt mit dem Rest R verbunden bzw. verknüpft (n = 0).

Bevorzugt ist die zweibindige Bindegruppe A in der allgemeinen Formel (I) ein Sauerstoffatom oder eine Gruppe -NR'-, worin R' ein H-Atom oder ein Alkyl- oder Arylrest mit 1 bis 12 C-Atomen ist, oder die zweibindige Bindegruppe A enthält eine Amid-, Carbamat-, Harnstoff-, Imino-, Carboxylat-, Carbamoyl-, Amidino-, Carbonat-, Sulfonat- oder Sulfinatgruppe. Besonders bevorzugt als Bindegruppe A sind Urethan- und Harnstoffgruppen, die durch Umsetzung bestimmter funktioneller Gruppen eines Prepolymers mit einem Organosilan, welches eine weitere funktionelle Gruppe trägt, erhalten werden können. Urethangruppen können zum Beispiel entstehen, wenn entweder das Polymergerüst terminale Hydroxygruppen enthält und als weitere Komponente Isocyanatosilane eingesetzt werden, oder wenn umgekehrt ein Polymer, welches endständige Isocyanatgruppen aufweist, mit einem terminale Hydroxygruppen enthaltenden Alkoxysilan umgesetzt wird. Auf ähnliche Weise können Harnstoffgruppen erhalten werden, wenn eine terminale primäre oder sekundäre Aminogruppe - entweder am Silan oder am Polymer- eingesetzt wird, die mit einer im jeweiligen Reaktionspartner vorhandenen terminalen Isocyanatgruppe reagiert. Das bedeutet, dass entweder ein Aminosilan mit einem terminale Isocyanatgruppen aufweisenden Polymer oder ein terminal mit einer Aminogruppe substituiertes Polymer mit einem Isocyanatosilan zur Reaktion gebracht wird.
Urethan- und Harnstoffgruppen erhöhen vorteilhaft die Festigkeit der Polymerketten und des gesamten vernetzten Polymers.

Der Rest R ist ein zweibindiger Kohlenwasserstoffrest mit 1 bis 12 C-Atomen. Bei dem Kohlenwasserstoffrest kann es sich um einen geradkettigen, verzweigten oder cyclischen Alkylenrest handeln. Der Kohlenwasserstoffrest kann gesättigt oder ungesättigt sein. R ist bevorzugt ein zweibindiger Kohlenwasserstoffrest mit 1 bis 6 C-Atomen. Über die Länge der Kohlenwasserstoffreste, die eines der Bindeglieder beziehungsweise das Bindeglied zwischen Polymergerüst und Silylrest bilden, kann die Aushärtungsgeschwindigkeit der Zusammensetzung beeinflusst werden. Besonders bevorzugt ist R eine Methylen-, Ethylen- oder n-Propylengruppe, insbesondere ein Methylen- oder n-Propylenrest. Alkoxysilan-terminierte Verbindungen mit einer Methylengruppe als Bindeglied zum Polymergerüst - sogenannte α-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt.
Generell führt eine Verlängerung der verbindenden Kohlenwasserstoffkette zu einer verminderten Reaktivität der Polymere. Insbesondere die γ-Silane - sie enthalten den unverzweigten Propylenrest als Bindeglied -weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf. Durch ein bewusstes Kombinieren von α- und γ-Alkoxysilan-terminierten Bausteinen kann somit die Aushärtungsgeschwindigkeit der Systeme wunschgemäß beeinflusst werden.

Im Rahmen der vorliegenden Erfindung ist R ganz besonders bevorzugt eine Methylengruppe, da aufgrund der solchermaßen erhöhten Reaktivität der terminalen Silylgruppen kein Härtungskatalysator erforderlich ist, der in seiner Wirksamkeit durch die schwefelhaltige Komponente C) eingeschränkt sein könnte.

Die mit dem Si-Atom direkt verbundenen Substituenten X, Y und Z sind unabhängig voneinander C₁ - C₈ - Alkylreste, C₁ - C₈ - Alkoxyreste oder C₁ - C₈ - Acyloxyreste. Dabei muss mindestens einer der Reste X, Y, Z eine hydrolysierbare Gruppe, das heißt ein C₁ - C₈ - Alkoxyrest oder ein C₁ - C₈ - Acyloxyrest sein. Als hydrolysierbare Gruppen werden vorzugsweise Alkoxygruppen, insbesondere Methoxy-, Ethoxy-, i-Propyloxy- und i-Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die durch Hydrolyse der Reste gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe -O-CO-CH₃, verwendet werden.

Das/die alkoxy- und/oder acyloxysilanterminierte(n) Polymer(e) weist/weisen bevorzugt mindestens zwei Endgruppen der allgemeinen Formel (I) auf. Jede Polymerkette enthält damit mindestens zwei Verknüpfungsstellen, an denen sich unter Abspaltung der hydrolysierten Reste in Gegenwart von Luftfeuchtigkeit die Kondensation der Polymere vollziehen kann. Auf diese Weise wird eine regelmäßige und schnelle Vernetzbarkeit erreicht, so dass Verklebungen mit guten Festigkeiten erhalten werden können. Darüber hinaus lässt sich über die Menge und den Aufbau der hydrolysierbaren Gruppen - zum Beispiel durch Verwendung von Di- oder Trialkoxysilylgruppen, Methoxygruppen oder längeren Resten - die Ausgestaltung des erzielbaren Netzwerks als langkettiges System (Thermoplaste), relativ weitmaschiges dreidimensionales Netzwerk (Elastomere) oder hochvernetztes System (Duroplaste) steuern, so dass damit unter anderem die Elastizität, die Flexibilität und die Hitzebeständigkeit der fertig vernetzten Zusammensetzungen beeinflusst werden können.

Bevorzugt ist X eine Alkylgruppe und Y und Z sind jeweils unabhängig voneinander eine Alkoxygruppe, oder X, Y und Z sind jeweils unabhängig voneinander eine Alkoxygruppe. Generell verfügen Polymere, die Di- beziehungsweise Trialkoxysilylgruppen enthalten, über hoch reaktive Verknüpfungsstellen, die ein schnelles Aushärten, hohe Vernetzungsgrade und damit gute Endfestigkeiten ermöglichen. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.
Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" - der Formstabilität eines entsprechenden Klebstoffs unter dem Einfluss von Kraft- und gegebenenfalls Temperatureinwirkung - auf.

Besonders bevorzugt sind die Reste X, Y und Z in der allgemeinen Formel (I) jeweils unabhängig voneinander eine Methyl-, eine Ethyl-, eine Methoxy- oder eine Ethoxygruppe, wobei mindestens einer der Reste eine Methoxy- oder Ethoxygruppe ist. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen.
Besonders bevorzugt sind X, Y und Z jeweils unabhängig voneinander eine Methyl- oder eine Methoxygruppe, wobei mindestens einer der Reste eine Methoxy-Gruppe ist. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden.
Interessante Gestaltungsmöglichkeiten eröffnen auch Kombinationen beider Gruppen. Wird zum Beispiel für X Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn auch über die Ausgestaltung der Alkoxygruppen eine verzögerte Aushärtung erreicht werden soll.

Der Gesamtanteil der Polymeren mit mindestens einer Endgruppe der allgemeinen Formel (I) an der erfindungsgemäßen Zusammensetzung beträgt bevorzugt 10 bis 60 Gew.-%, besonders bevorzugt 15 bis 50 Gew.-%, beispielsweise 20 bis 45 Gew.-%, insbesondere 25 bis 40 Gew.-%, jeweils bezogen auf das Gesamtgewicht der härtbaren Zusammensetzung.

Die erfindungsgemäße härtbare Zusammensetzung enthält als weiteren Bestandteil mindestens eine Verbindung der allgemeinen Formel (II) 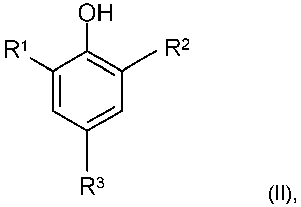 worin
R¹, R² und R³ unabhängig voneinander unsubstituierte Alkylreste oder mindestens ein Heteroatom enthaltende und mindestens 10 C-Atome umfassende organische Reste sind, wobei die Reste R¹, R² und R³ frei von Thioethergruppen sind. Unsubstituierte Alkylreste sind erfindungsgemäß bevorzugt Alkylreste mit 1 bis 6 C-Atomen, besonders bevorzugt Methyl-, Ethyl-, i-Propyl, i-Butyl und tert-Butyl-Reste, insbesondere Methyl- und tert-Butyl-Reste. Bevorzugt ist mindestens einer der Reste R¹, R² und R³ ein mindestens ein Heteroatom enthaltender und mindestens 10 C-Atome umfassender organischer Rest. Als mindestens ein Heteroatom enthaltende und mindestens 10 C-Atome umfassende organische Reste sind Reste bevorzugt, die mindestens eine substituierte oder unsubstituierte Hydroxyphenylgruppe aufweisen; beispielsweise Reste mit mehreren aromatischen Gruppen, die untereinander durch Alkylen-Brücken verbunden sind, wobei mindestens eine dieser aromatischen Gruppen eine substituierte oder unsubstituierte Hydroxyphenylgruppe ist. Eine bevorzugte Verbindung entsprechend der allgemeinen Formel (II), die einen derartigen Rest enthält, ist beispielsweise 3,3',3",5,5',5"-Hexa-tert-butyl-α,α',α"-(mesitylen-2,4,6,-triyl)tri-p-cresol, das unter der Bezeichnung "Irganox® 1330" kommerziell erhältlich ist.

Ebenfalls erfindungsgemäß bevorzugt als Verbindung der allgemeinen Formel (II) ist eine Verbindung der Formel (IV) 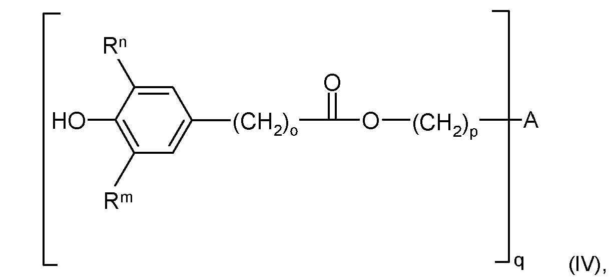 worin
Rⁿ und R^{m} unabhängig voneinander unsubstituierte Alkylreste sind, wobei mindestens einer der Reste Rⁿ und R^{m} mindestens vier C-Atome enthält; o und p unabhängig voneinander ganze Zahlen von 1 bis 8 sind; q eine ganze Zahl von 2 bis 4 ist und A ein q-valenter organischer Rest mit 1 bis 4 C-Atomen ist. Besonders bevorzugt ist mindestens einer der Reste Rⁿ und R^{m} ein tert-Butyl-Rest, o ist 2 und p ist 1 oder 2, q ist 2 oder 4 und A ist für q=2 eine -O-(CH₂)₂-O- -Gruppe und für q=4 ein C-Atom. Derartige, erfindungsgemäß besonders bevorzugte Verbindungen sind beispielsweise unter den Bezeichnungen "Irganox® 245" und "Irganox® 1010" kommerziell erhältlich.

Die erfindungsgemäße härtbare Zusammensetzung enthält ferner mindestens eine Verbindung der allgemeinen Formel (III) 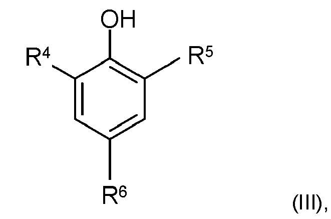 worin
R⁴, R⁵ und R⁶ unabhängig voneinander unsubstituierte Alkylreste oder lineare, mindestens eine Thioether-Gruppe enthaltende Alkylreste sind, wobei mindestens einer der Reste R⁴, R⁵ und R⁶ ein linearer, mindestens eine Thioethergruppe enthaltender Alkylrest ist. Bevorzugte unsubstituierte Alkylreste sind Alkylreste mit 1 bis 6 C-Atomen, unter diesen sind Methyl-, Ethyl-, i-Propyl, i-Butyl und tert-Butyl-Reste, insbesondere Methyl- und tert-Butyl-Reste, besonders bevorzugt.

Unter einer Thioethergruppe wird ein Strukturelement der allgemeinen Form -CR'R"-S-CR"'R"" verstanden, worin R', R", R'" und R"" H-Atome oder beliebige Kohlenwasserstoffreste sind. Die linearen, mindestens eine Thioethergruppe enthaltenden Alkylreste haben bevorzugt 6 bis 18, besonders bevorzugt 8 bis 16, insbesondere 9 bis 14 C-Atome. Ganz besonders bevorzugte Reste sind der -CH₂-S-C₈H₁₇-Rest und der -CH₂-S-C₁₂H₂₅-Rest.

Bevorzugt sind mindestens zwei der Reste R⁴, R⁵ und R⁶ jeweils lineare, mindestens eine Thioethergruppe enthaltende Alkylreste. Dementsprechend sind unter den Verbindungen der allgemeinen Formel (III) Verbindungen der Formel (V) 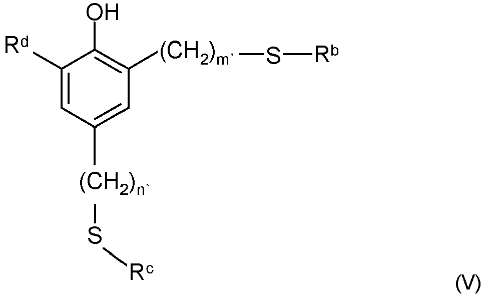 erfindungsgemäß bevorzugt, worin R^{d} ein unsubstituierter Alkylrest mit 1 bis 8 C-Atomen ist, R^{b} und R^{c} unabhängig voneinander lineare Alkylreste mit 1 bis 20 C-Atomen sind und n' und m' unabhängig voneinander ganze Zahlen von 1 bis 8 sind. Besonders bevorzugt ist R^{d} eine Methyl-, Ethyl- oder i-Propylgruppe, n' und m' sind 1 und R^{b} und R^{c} haben jeweils 8 bis 12 C-Atome, wobei R^{b} und R^{c} die gleiche Anzahl C-Atome enthalten.

Es hat sich gezeigt, dass es beim Einsatz einer spezifischen Kombination von mindestens einer Verbindung der allgemeinen Formel (II) und mindestens einer Verbindung der allgemeinen Formel (III) zu einer synergistischen Wirkung dieser Bestandteile kommt, wodurch die erfindungsgemäßen härtbaren Zusammensetzungen eine verbesserte Dauertemperaturbeständigkeit aufweisen.

Der Anteil an Verbindungen der allgemeinen Formeln (II) und (III) an der erfindungsgemäßen härtbaren Zusammensetzung beträgt bevorzugt jeweils 0,05 bis 5 Gew.-%, besonders bevorzugt jeweils 0,1 bis 2 Gew.-% und insbesondere jeweils 0,15 bis 1 Gew.-%, beispielsweise jeweils 0,2 bis 0,5 Gew.-%. Das Gewichtsverhältnis der in der erfindungsgemäßen härtbaren Zusammensetzung eingesetzten Verbindungen der allgemeinen Formeln (II) und (III) beträgt bevorzugt 3:1 bis 1:3, stärker bevorzugt 2:1 bis 1:2 und besonders bevorzugt 1,5:1 bis 1:1,5.

Die erfindungsgemäße Zusammensetzung kann über die bisher aufgeführten Bestandteile hinaus weitere Inhaltsstoffe enthalten, die zur Ausprägung erwünschter Eigenschaften beitragen können. So kann es nötig sein, zur Einstellung der elastischen Eigenschaften und zur Verbesserung der Verarbeitbarkeit der Zusammensetzung einen oder mehrere Weichmacher zuzusetzen. Unter einem Weichmacher wird eine Substanz verstanden, welche die Viskosität der Zusammensetzung verringert und damit die Verarbeitbarkeit erleichtert und darüber hinaus Flexibilität und Dehnungsvermögen der Zusammensetzungen verbessert.

Der Weichmacher ist bevorzugt ausgewählt aus einem Fettsäureester, einem Dicarbonsäureester (Cyclohexandicarbonsäuredialkylester ausgenommen), einem Ester OH-Gruppen tragender oder epoxidierter Fettsäuren, einem Fett, einem Glykolsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehr davon. Durch die gezielte Auswahl eines dieser Weichmacher oder einer spezifischen Kombination können weitere vorteilhafte Eigenschaften der erfindungsgemäßen Zusammensetzung, zum Beispiel Geliervermögen der Polymere, Kälteelastizität beziehungsweise Kältebeständigkeit oder auch antistatische Eigenschaften realisiert werden.

Von den Polyether-Weichmachern werden bevorzugt endgruppenverschlossene Polyethylenglykole eingesetzt, beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon. Ebenfalls als Weichmacher geeignet sind beispielsweise Ester der Abietinsäure, Buttersäureester, Essigsäureester, Propionsäureester, Thiobuttersäureester, Zitronensäureester sowie Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf). Darüber hinaus sind als Weichmacher geeignet die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf). Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Grundsätzlich können auch Phthalsäureester als Weichmacher eingesetzt werden, diese werden jedoch aufgrund ihres toxikologischen Potentials nicht bevorzugt.

Die Gesamtmenge an Weichmacher(n) in erfindungsgemäßen härtbaren Zusammensetzungen beträgt vorzugsweise 1 bis 30, Gew.-%, bevorzugt 5 bis 25 Gew.-% und besonders bevorzugt 10 bis 20 Gew.-%, jeweils bezogen auf das Gesamtgewicht der härtbaren Zusammensetzung.

Eine für bestimmte Anwendungen zu hohe Viskosität der erfindungsgemäßen Zusammensetzung kann auch durch Verwendung eines Reaktivverdünners auf einfache und zweckmäßige Weise verringert werden, ohne dass es zu Entmischungserscheinungen (zum Beispiel Weichmacherwanderung) in der ausgehärteten Masse kommt. Vorzugsweise weist der Reaktivverdünner mindestens eine funktionelle Gruppe auf, die nach der Applikation zum Beispiel mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme. Als Reaktivverdünner kann man alle Verbindungen, die mit der erfindungsgemäßen Zusammensetzung unter Verringerung der Viskosität mischbar sind und über mindestens eine mit dem Bindemittel reaktive Gruppe verfügen, allein oder als Kombination mehrerer Verbindungen einsetzen. Die Viskosität des Reaktivverdünners beträgt bevorzugt weniger als 20.000 mPas, besonders bevorzugt etwa 0,1 - 6.000 mPas, ganz besonders bevorzugt 1 - 1000 mPas (Brookfield RVT, 23 °C, Spindel 7, 10 U/min).

Als Reaktivverdünner lassen sich beispielsweise folgende Stoffe einsetzen: mit Isocyanatosilanen umgesetzte Polyalkylenglykole (zum Beispiel Synalox 100-50B, DOW), Alkyltrimethoxysilan, Alkyltriethoxysilan, wie Methyltrimethoxysilan, Methyltriethoxysilan sowie Vinyltrimethoxysilan (XL 10, Wacker), Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methylcarbamat (XL65, Wacker), Hexadecyltrimethoxysilan, 3-Octanoylthio-1-propyltriethoxysilan und Teilhydrolysate dieser Verbindungen. Ferner sind ebenfalls folgende Polymere von Kaneka Corp. als Reaktivverdünner einsetzbar: MS S203H, MS S303H, MS SAT 010, und MS SAX 350. Weiterhin als Reaktivverdünner geeignet sind Polymere, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH - Gruppen enthält. Die OH -Gruppen können sowohl primär als auch sekundär sein.
Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie zum Beispiel Ester, Carbonate, Amide enthalten. Zur Herstellung eines Reaktivverdünners durch Umsetzung von Polyol mit Polyisocyanat und Alkoxysilan wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt. Unter den Alkoxysilylgruppen sind die Di- und Trialkoxysilylgruppen bevorzugt.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4-oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der erfindungsgemäßen Zusammensetzung lassen sich neben oder anstatt eines Reaktivverdünners auch Lösungsmittel einsetzen. Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da in diesem Fall die Lagerstabilität steigt. C₁-C₁₀-Alkohole, besonders Methanol, Ethanol, i-Propanol, Isoamylalkohol und Hexanol werden besonders bevorzugt.

Die erfindungsgemäße Zusammensetzung kann außerdem einen Haftvermittler umfassen. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/lnden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar.

Ebenfalls im Rahmen der vorliegenden Erfindung als Haftvermittler im oben genannten Sinne geeignet sind die Kolophoniumharze und deren Derivate, beispielsweise deren Ester oder Alkohole. Besonders gut geeignet sind Silan-Haftvermittler, insbesondere Aminosilane.

In einer speziellen Ausführungsform der erfindungsgemäßen härtbaren Zusammensetzung umfasst die Zusammensetzung ein Silan der allgemeinen Formel (VI)

R^{1'}R^{2'}N-R^{3'}-SiXYZ (VI)

als Haftvermittler, worin
R^{1'} und R^{2'} unabhängig voneinander Wasserstoff oder C₁ - C₈ -Alkylreste,
R^{3'} ein zweibindiger gegebenenfalls ein Heteroatom enthaltender Kohlenwasserstoffrest mit 1 - 12 C-Atomen, und
X, Y, Z jeweils unabhängig voneinander C₁ - C₈ - Alkyl-, C₁ - C₈ - Alkoxy- oder C₁ - C₈ - Acyloxyreste sind, wobei mindestens einer der Reste X, Y, Z eine C₁ - C₈ - Alkoxy- oder C₁ - C₈ - Acyloxygruppe ist. Derartige Verbindungen weisen naturgemäß eine hohe Affinität zu den bindenden Polymerkomponenten der erfindungsgemäßen härtbaren Zusammensetzung, aber auch zu einer großen Bandbreite an polaren sowie unpolaren Oberflächen auf und tragen deshalb zur Ausbildung einer besonders stabilen Haftung zwischen der Klebstoffzusammensetzung und den jeweils zu verklebenden Substraten bei.
Bei der Bindegruppe R^{3'} kann es sich beispielsweise um einen geradkettigen oder verzweigten oder cyclischen, substituierten oder unsubstituierten Alkylenrest handeln. Gegebenenfalls ist als Heteroatom darin Stickstoff (N) oder Sauerstoff (O) enthalten. Wenn X, Y und/oder Z eine Acyloxygruppe sind, kann dies zum Beispiel die Acetoxygruppe -OCO-CH₃ sein.

Ein oder mehrere Haftvermittler ist/sind bevorzugt zu 0,1 bis 5 Gew.-%, stärker bevorzugt zu 0,2 bis 2 Gew.-%, insbesondere zu 0,3 bis 1 Gew.-%, jeweils bezogen auf das Gesamtgewicht der Zusammensetzung, in der erfindungsgemäßen härtbaren Zusammensetzung enthalten.

Als Füllstoffe für die erfindungsgemäße Zusammensetzung eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis sind beispielsweise unter den Bezeichnungen Expancel® oder Dualite® kommerziell erhältlich. Diese sind aus anorganischen oder organischen Stoffen zusammengesetzt, jede mit einem Durchmesser von 1 mm oder weniger, bevorzugt von 500 µm oder weniger. Für manche Anwendungen sind Füllstoffe bevorzugt, die den Zubereitungen Thixotropie verleihen. Solche Füllstoffe werden auch als rheologische Hilfsmittel beschrieben, zum Beispiel hydrogenisiertes Rizinusöl, Fettsäureamide oder quellbare Kunststoffe wie PVC. Damit sie gut aus einer geeigneten Dosiervorrichtung (zum Beispiel Tube) ausgepresst werden können, besitzen solche Zubereitungen eine Viskosität von 3.000 bis 15.000, vorzugsweise 4.000 bis 8.000 mPas oder auch 5.000 bis 6.000 mPas. Die Füllstoffe werden vorzugsweise in einer Menge von 10 bis 70 Gew.-%, stärker bevorzugt von 20 bis 60 Gew.-%, beispielsweise von 25 bis 55 Gew.-%, insbesondere von 35 bis 50 Gew.-%, bezogen auf das Gesamtgewicht der erfindungsgemäßen Zusammensetzung, eingesetzt. Es kann ein einzelner Füllstoff oder eine Kombination mehrerer Füllstoffe verwendet werden.

Beispielsweise wird als Füllstoff eine hochdisperse Kieselsäure mit einer BET-Oberfläche von 10 bis 500 m²/g eingesetzt. Bei ihrer Verwendung bewirkt eine derartige Kieselsäure keine wesentliche Erhöhung der Viskosität der erfindungsgemäßen Zusammensetzung, trägt aber zu einer Verstärkung der gehärteten Zubereitung bei. Über diese Verstärkung werden zum Beispiel die Anfangsfestigkeiten, Zugscherfestigkeiten und die Adhäsion der Kleb-, Dicht- oder Beschichtungsstoffe, in denen die erfindungsgemäße Zusammensetzung verwendet wird, verbessert. Bevorzugt werden ungecoatete Kieselsäuren mit einer BET-Oberfläche von kleiner als 100, stärker bevorzugt von kleiner als 65 m²/g, und/oder gecoatete Kieselsäuren mit einer BET-Oberfläche 100 bis 400, stärker bevorzugt von 100 bis 300, insbesondere von 150 bis 300 und ganz besonders bevorzugt von 200 bis 300 m²/g eingesetzt.

Als Zeolithe werden bevorzugtAlkali-Alumosilikate eingesetzt, beispielsweise Natrium-Kalium-Alumosilikate der allgemeinen Summenformel aK₂O*bNa₂O*Al₂O₃*2SiO*nH₂O mit 0 < a, b < 1 und a + b = 1. Vorzugsweise ist die Porenöffnung des eingesetzten Zeoliths beziehungsweise der eingesetzten Zeolithe gerade groß genug, um Wassermoleküle aufzunehmen. Dementsprechend ist eine effektive Porenöffnung der Zeolithe von weniger als 0,4 nm bevorzugt. Besonders bevorzugt beträgt die effektive Porenöffnung 0,3 nm ± 0,02 nm. Der/die Zeolith(e) wird/werden vorzugsweise in Form eines Pulvers eingesetzt.

Bevorzugt wird Kreide als Füllstoff verwendet. Als Kreide können dabei kubische, nicht kubische, amorphe und andere Modifikationen von Calciumcarbonat eingesetzt werden. Vorzugsweise sind die eingesetzten Kreiden oberflächenbehandelt beziehungsweise beschichtet. Als Beschichtungsmittel werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel wird üblicherweise in einem Anteil von 0,1 bis 20 Gew.%, bevorzugt 1 bis 5 Gew.%, bezogen auf das Gesamtgewicht der Rohkreide, eingesetzt.

Je nach angestrebtem Eigenschaftsprofil können gefällte oder gemahlene Kreiden oder Gemische davon verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1,5 m²/g und 50 m²/g.

Die erfindungsgemäße Zusammensetzung kann darüber hinaus UV-Stabilisatoren enthalten. Vorzugsweise beträgt der Anteil der UV-Stabilisatoren an der erfindungsgemäßen Zusammensetzung bis zu 2 Gew.-%, insbesondere bis zu 1 Gew.-%. Als UV-Stabilisatoren besonders geeignet sind die so genannten Hindered Amine Light Stabilisators (HALS). Beispielsweise kann ein UV-Stabilisator eingesetzt werden, der eine Silylgruppe trägt und beim Vernetzen bzw. Aushärten in das Endprodukt eingebaut wird. Ferner können auch Benzotriazole, Benzophenone, Benzoate, Cyanacrylate, Acrylate, sterisch gehinderte Phenole, Phosphor und / oder Schwefel zugegeben werden. Bevorzugt enthält die erfindungsgemäße härtbare Zusammensetzung mindestens einen Bis(piperidyl)dicarbonsäurediester, beispielsweise Bis(2,2,6,6-tetramethyl-4-piperidyl)sebacat.

Häufig ist es sinnvoll, die erfindungsgemäße Zusammensetzung weiter gegenüber eindringender Feuchtigkeit zu stabilisieren, um die Lagerfähigkeit (shelf-life) noch stärker zu erhöhen. Eine solche Verbesserung der Lagerfähigkeit lässt sich beispielsweise durch den Einsatz von Trockenmitteln erreichen. Als Trockenmittel eignen sich alle Verbindungen, die mit Wasser unter Bildung einer gegenüber den in der Zusammensetzung vorliegenden reaktiven Gruppen inerten Gruppe reagieren, und hierbei möglichst geringe Veränderungen ihres Molekulargewichts erfahren. Weiterhin muss die Reaktivität der Trockenmittel gegenüber in die Zusammensetzung eingedrungener Feuchtigkeit höher sein als die Reaktivität der Endgruppen des in der Zusammensetzung vorliegenden erfindungsgemäßen Silyl-Gruppen tragenden Polymers. Als Trockenmittel eignen sich beispielsweise Isocyanate.

Vorteilhaft werden als Trockenmittel auch Silane eingesetzt, beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Besonders bevorzugt sind hier Vinyltrimethoxysilan und Tetraethoxysilan hinsichtlich Effizienz und Kosten. Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen des erfindungsgemäßen Silyl-Gruppen tragenden Polymers. Schließlich können als Trockenmittel auch Alkylorthoformiate oder -orthoacetate eingesetzt werden, beispielsweise Methyl- oder Ethylorthoformiat, Methyl- oder Ethylorthoacetat. Die erfindungsgemäße Zusammensetzung enthält vorzugsweise 0,01 bis 10 Gew.-% Trockenmittel, bezogen auf das Gesamtgewicht der Zusammensetzung.

Vorzugsweise enthält die erfindungsgemäße härtbare Zusammensetzung folgende Bestandteile in den angegebenen Gewichtsanteilen:

| | |
|---|---|
| mindestens ein Polymer mit mindestens einer Endgruppe der allgemeinen Formel (I) | 10-60 Gew.-%, |
| mindestens eine Verbindung der allgemeinen Formel (II) | 0,05-5 Gew.-%, |
| mindestens eine Verbindung der allgemeinen Formel (III) | 0,05-5 Gew.-%, |
| einen oder mehrere Füllstoff(e) | 10-70 Gew.-%, |
| einen oder mehrere Weichmacher | 1 bis 30 Gew.-%, |
| einen oder mehrere Hilfsstoff(e) | 0-15 Gew.-%, |

wobei sich die Gewichtsanteile zu 100 Gew.-% aufaddieren und die Gewichtsanteile auf das Gesamtgewicht der härtbaren Zusammensetzung bezogen sind.

Unter dem Begriff "Hilfsstoffe" werden in untergeordneten Mengen vorliegende Bestandteile zusammengefasst, beispielsweise Härtungskatalysatoren, Haftvermittler, Wasserfänger, UV-Stabilisatoren, Alterungsschutzmittel, rheologische Hilfsmittel, Farbpigmente oder Farbpasten, Fungizide, Flammschutzmittel und/oder Lösungsmittel.

Bezüglich der bevorzugten Vertreter der einzelnen Bestandteile und deren bevorzugt eingesetzten Mengen gilt jeweils das oben bei der Beschreibung derjeweiligen Bestandteile Gesagte.

Die Herstellung der erfindungsgemäßen Zusammensetzung erfolgt nach bekannten Verfahren durch inniges Vermischen der Bestandteile in geeigneten Dispergieraggregaten, zum Beispiel einem Schnellmischer.

Ein weiterer Gegenstand der vorliegenden Erfindung ist die Verwendung der erfindungsgemäßen härtbaren Zusammensetzung als Kleb-, Dicht- und/oder Beschichtungsstoff.

Ein weiterer Gegenstand der vorliegenden Erfindung ist die Verwendung einer Kombination von mindestens einer Verbindung der allgemeinen Formel (II) 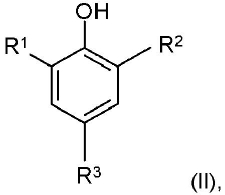 worin
R¹, R² und R³ unabhängig voneinander unsubstituierte Alkylreste oder mindestens ein Heteroatom enthaltende und mindestens 10 C-Atome umfassende organische Reste sind, wobei die Reste R¹, R² und R³ frei von Thioethergruppen sind, mit mindestens einer Verbindung der allgemeinen Formel (III) 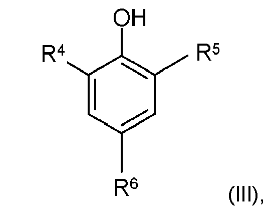 worin
R⁴, R⁵ und R⁶ unabhängig voneinander unsubstituierte Alkylreste oder lineare, mindestens eine Thioether-Gruppe enthaltende Alkylreste sind, wobei mindestens einer der Reste R⁴, R⁵ und R⁶ ein linearer, mindestens eine Thioethergruppe enthaltender Alkylrest ist, zur Erhöhung der Temperaturstabilität in härtbaren Zusammensetzungen. Bezüglich bevorzugt eingesetzter Verbindungen der allgemeinen Formeln (II) und (III) gilt das oben bei der Beschreibung der erfindungsgemäßen Zusammensetzungen Gesagte entsprechend.

Grundsätzlich können in der vorliegenden Erfindung alle im Rahmen des vorliegenden Textes aufgeführten Merkmale, insbesondere die als bevorzugt und/oder speziell ausgewiesenen Ausführungsformen, Anteilsbereiche, Bestandteile und sonstigen Merkmale der erfindungsgemäßen Zusammensetzung und der erfindungsgemäßen Verwendungen in allen möglichen und sich nicht gegenseitig ausschließenden Kombinationen verwirklicht sein, wobei Kombinationen von als bevorzugt und/oder speziell ausgewiesenen Merkmalen ebenfalls als bevorzugt und/oder speziell angesehen werden.

### Beispiele

Es wurden Zusammensetzungen gemäß Tabellen 1 und 2 durch Mischen der dort angegebenen Inhaltsstoffe in einem Speedmixer hergestellt.

Aus den Zusammensetzungen wurden S2-Probekörper hergestellt. Diese wurden je nach Angabe in den Tabellen für 42 oder 84 Tage einer Lagerung bei Normklima (23°C, 50% relative Luftfeuchte) oder bei 100°C in einem Umlufttrockenschrank mit Luftaustausch unterzogen, wobei die Lagerung bei 100°C eine Langzeitlagerung simuliert.

Nach der Lagerung (nach Lagerung bei 100°C 1 d Rekonditionierung bei Normklima) wurden die Messungen zur Ermittlung des 50%- beziehungsweise 100%-Moduls und der Reißfestigkeit mittels einer Zerreißmaschine durchgeführt. Als dauerhaft temperaturstabil werden Probekörper angesehen, bei denen die maximale prozentuale Abweichung der Elastizitätswerte nach Lagerung bei den jeweils angegebenen unterschiedlichen Bedingungen ± 20% beträgt.

**Tabelle 1: Zusammensetzungen und Ergebnisse**

| Zusammensetzung (Angaben in Gew.-%) | 1 (eg) | 2 (eg) | 3 (V) | 4 (V) |
|---|---|---|---|---|
| | | | | |
| Polymer (STP-E 10, Fa. Wacker) | 33,2 | 33,2 | 33,2 | 33,2 |
| Weichmacher (Mesamoll®, Fa. Lanxess) | 15,3 | 15,3 | 15,3 | 15,3 |
| Füllstoff (gecoatete, gefällte Kreide) | 47,6 | 47,6 | 47,6 | 47,6 |
| Irganox® 245 | 0,3 | 0,3 | | 0,3 |
| Irganox® 1520 | 0,3 | 0,3 | 0,3 | |
| Tinuvin® 770 | 0,3 | | 0,3 | |
| Hilfsstoffe | 3 | 3,3 | 3,3 | 3,6 |
| Gesamt | 100 | 100 | 100 | 100 |
| | | | | |

| Testergebnisse nach 42 d (Normklima) | | | | |
|---|---|---|---|---|
| Modul 50% (N/mn²) | 1,28 | 1,27 | 1,25 | 1,27 |
| Modul 100 % (N/mm²) | 2,0 | 2,01 | 1,96 | 1,99 |
| Reißfestigkeit (N/mm²) | 3,32 | 3,29 | 2,99 | 3,18 |
| | | | | |

| Testergebnisse nach 84 d (100°C) | | | | |
|---|---|---|---|---|
| Modul 50% (N/mm²) | 1,05 | 1,03 | 0,24 | 0,75 |
| Modul 100 % (N/mm²) | 1,77 | 1,7 | 0,45 | 1,33 |
| Reißfestigkeit (N/mm²) | 2,67 | 2,79 | 1,19 | 2,41 |
| | | | | |

| Änderung im Vergleich 84 d vs. 42 d (%) | | | | |
|---|---|---|---|---|
| Modul 50% (N/mm²) | -18 | -19 | -81 | -41 |
| Modul 100 % (N/mm²) | -12 | -15 | -77 | -33 |
| Reißfestigkeit (N/mm²) | -20 | -15 | -60 | -24 |

| | | | | |
|---|---|---|---|---|
| eg = erfindungsgemäß V = Vergleichsversuch | | | | |

**Tabelle 2: Zusammensetzungen und Ergebnisse**

| Zusammensetzung (Angaben in Gew.-%) | 3 (eg) | 4 (eg) | 5 (eg) | 6 (V) |
|---|---|---|---|---|
| | | | | |
| Polymer (STP-E 10, Fa. Wacker) | 33,2 | 33,2 | 33,2 | 33,2 |
| Weichmacher (Mesamoll®, Fa. Lanxess) | 15,3 | 15,3 | 15,0 | 15,3 |
| Füllstoff (gecoatete, gefällte Kreide) | 39,6 | 39,6 | 39,6 | 39,6 |
| Irganox® 245 | 0,3 | | 0,3 | 0,3 |
| Irganox® 1010 | | | | 0,3 |
| Irganox® 1330 | | 0,3 | | |
| Irganox® 1520 | 0,3 | 0,3 | 0,3 | |
| Tinuvin® 770 | 0,3 | 0,3 | 0,3 | 0,3 |
| Hilfsstoffe | 11 | 11 | 11,3 | 11 |
| Gesamt | 100 | 100 | 100 | 100 |
| | | | | |

| Testergebnisse nach 84 d (Normklima) | | | | |
|---|---|---|---|---|
| Modul 50% (N/mm²) | 1,20 | 1,19 | 1,22 | 1,20 |
| Modul 100 % (N/mm²) | 1,96 | 1,96 | 1,99 | 1,96 |
| Reißfestigkeit (N/mm²) | 3,40 | 3,30 | 3,32 | 3,17 |
| | | | | |

| Testergebnisse nach 42 d (100°C) | | | | |
|---|---|---|---|---|
| Modul 50% (N/mm²) | 1,02 | 0,95 | 1,01 | 0,73 |
| Modul 100 % (N/mm²) | 1,73 | 1,62 | 1,71 | 1,31 |
| Reißfestigkeit (N/mm²) | 3,35 | 3,30 | 3,31 | 2,86 |
| | | | | |

| Änderung im Vergleich 42 d vs. 84 d (%) | | | | |
|---|---|---|---|---|
| Modul 50% (N/mm²) | -15 | -20 | -17 | -39 |
| Modul 100 % (N/mm²) | -12 | -17 | -14 | -33 |
| Reißfestigkeit (N/mm²) | -1 | 0 | 0 | -10 |

| | | | | |
|---|---|---|---|---|
| eg = erfindungsgemäß V = Vergleichsbeispiel | | | | |

Die Versuchsergebnisse zeigen, dass die Abweichung vom Ausgangswert bei den erfindungsgemäßen Zusammensetzungen nach Langzeitlagerung durchgängig maximal 20% beträgt, während bei nicht erfindungsgemäßen Zusammensetzungen deutlich höhere Abweichungen auftreten. Aus dem Vergleich der Zusammensetzungen 3, 4 und 5 mit der Zusammensetzung 6 wird ersichtlich, dass eine Kombination zweier gleichartiger Stabilisatoren (Irganox® 245 Irganox® 1010, nicht erfindungsgemäßes Beispiel 6) die synergistische Wirkung hinsichtlich der Dauertemperaturstabilität im Gegensatz zu der erfindungsgemäßen Kombination von Verbindungen der allgemeinen Formel (II) und Verbindungen der allgemeinen Formel (III) (erfindungsgemäße Beispiele 3, 4 und 5) nicht hervorbringt.

## Patentansprüche

1. Härtbare Zusammensetzung, mindestens enthaltend
A) mindestens ein Polymer mit mindestens einer Endgruppe der allgemeinen Formel (I)
-Aₙ-R-SiXYZ (I),
worin
A eine zweibindige, mindestens ein Heteroatom enthaltende Bindegruppe ist,
R ein zweibindiger Kohlenwasserstoffrest mit 1 - 12 C-Atomen ist, und
X, Y, Z Substituenten am Si-Atom und unabhängig voneinander C₁ -C₈ - Alkyl-, C₁ - C₈ - Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist, und
n 0 oder 1 ist;
B) mindestens eine Verbindung der allgemeinen Formel (II) 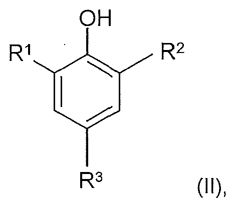 worin
R¹, R² und R³ unabhängig voneinander unsubstituierte Alkylreste oder mindestens ein Heteroatom enthaltende und mindestens 10 C-Atome umfassende organische Reste sind, wobei die Reste R¹, R² und R³ frei von Thioethergruppen sind; und
C) mindestens eine Verbindung der allgemeinen Formel (III) 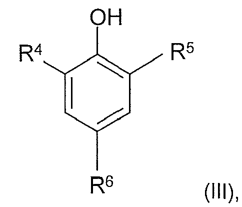 worin
R⁴, R⁵ und R⁶ unabhängig voneinander unsubstituierte Alkylreste oder lineare, mindestens eine Thioether-Gruppe enthaltende Alkylreste sind, wobei mindestens einer der Reste R⁴, R⁵ und R⁶ ein linearer, mindestens eine Thioethergruppe enthaltender Alkylrest ist.

2. Härtbare Zusammensetzung gemäß Anspruch 1, **dadurch gekennzeichnet, dass** die zweibindige Bindegruppe A in der allgemeinen Formel (I)
ein Sauerstoffatom, eine Gruppe -NR'-, worin R' ein H-Atom oder ein Alkyl- oder Arylrest mit 1 bis 12 C-Atomen ist, oder eine Amid-, Carbamat-, Harnstoff-, Imino-, Carboxylat-, Carbamoyl-, Amidino-, Carbonat-, Sulfonat- oder Sulfinatgruppe ist.

3. Härtbare Zusammensetzung gemäß mindestens einem der Ansprüche 1 und 2, **dadurch gekennzeichnet, dass** die Reste X, Y, Z in der allgemeinen Formel (I) jeweils unabhängig von einander eine Methyl-, eine Ethyl-, eine Methoxy- oder eine Ethoxygruppe sind, wobei mindestens einer der Reste eine Methoxy- oder Ethoxygruppe ist.

4. Härtbare Zusammensetzung gemäß mindestens einem der vorstehenden Ansprüche, **dadurch gekennzeichnet, dass** R in der allgemeinen Formel (I) eine Methylen-, Ethylen- oder n-Propylen-Gruppe ist.

5. Härtbare Zusammensetzung gemäß mindestens einem der vorstehenden Ansprüche, **dadurch gekennzeichnet, dass** die Verbindung der allgemeinen Formel (II) eine Verbindung der allgemeinen Formel (IV) 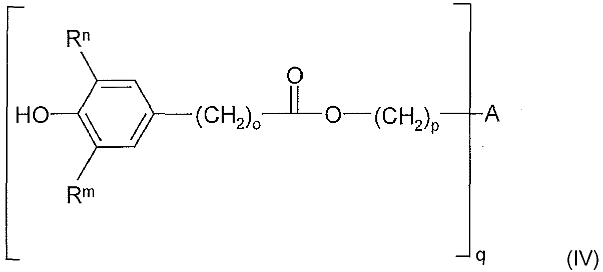 ist, worin Rⁿ und R^{m} unabhängig voneinander unsubstituierte Alkylreste sind, wobei mindestens einer der Reste Rⁿ und R^{m} mindestens vier C-Atome enthält; o und p unabhängig voneinander ganze Zahlen von 1 bis 8 sind; q eine ganze Zahl von 2 bis 4 ist und A ein q-valenter organischer Rest mit 1 bis 4 C-Atomen ist.

6. Härtbare Zusammensetzung gemäß mindestens einem der vorstehenden Ansprüche, **dadurch gekennzeichnet, dass** mindestens zwei der Reste R⁴, R⁵ und R⁶ jeweils lineare, mindestens eine Thioethergruppe enthaltende Alkylreste sind.

7. Härtbare Zusammensetzung gemäß mindestens einem der vorstehenden Ansprüche, **dadurch gekennzeichnet, dass** die Zusammensetzung folgende Bestandteile in den angegebenen Gewichtsanteilen enthält:
| | |
|---|---|
| mindestens ein Polymer mit mindestens einer Endgruppe der allgemeinen Formel (I) | 10-60 Gew.-%, |
| mindestens eine Verbindung der allgemeinen Formel (II) | 0,05-5 Gew.-%, |
| mindestens eine Verbindung der allgemeinen Formel (III) | 0,05-5 Gew.-%, |
| einen oder mehrere Füllstoff(e) | 10-70 Gew.-%, |
| einen oder mehrere Weichmacher | 1 bis 30 Gew.-%, |
| einen oder mehrere Hilfsstoff(e) | 0-10 Gew.-%, |
wobei sich die Gewichtsanteile zu 100 Gew.-% aufaddieren und die Gewichtsanteile auf das Gesamtgewicht der härtbaren Zusammensetzung bezogen sind.

8. Verwendung einer härtbaren Zusammensetzung gemäß mindestens einem der vorstehenden Ansprüche als Kleb-, Dicht- und/oder Beschichtungsstoff.

## Claims

1. A curable composition, at least containing
A) at least one polymer having at least one terminal group of the general formula (I)
-Aₙ-R-SiXYZ (I),
in which
A is a divalent bond group containing at least one heteroatom,
R is a divalent hydrocarbon functional group having 1-12 C atoms, and
X, Y, Z are substituents at the Si atom and, independently of one another, are C₁-C₈ alkyl, C₁-C₈ alkoxy, or C₁-C₈ acyloxy groups, wherein at least one of the functional groups X, Y,
Z is a C₁-C₈ alkoxy group or C₁-C₈ acyloxy group, and
n is 0 or 1;
B) at least one compound of the general formula (II) 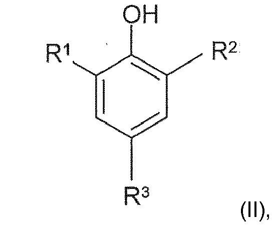 in which
R¹, R² and R³ independently of one another are unsubstituted alkyl functional groups or organic functional groups containing at least one heteroatom and comprising at least 10 C atoms, wherein the functional groups R¹, R² and R³ are free of thioether groups; and
C) at least one compound of the general formula (III) 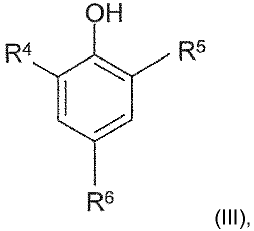 in which
R⁴, R⁵ and R⁶ independently of one another are unsubstituted alkyl functional groups or linear alkyl functional groups containing at least one thioether group, wherein at least one of the functional groups R⁴, R⁵ and R⁶ is a linear alkyl functional group containing at least one thioether group.

2. The curable composition according to claim 1, **characterized in that** the divalent bond group A in the general formula (I) is an oxygen atom, a group -NR'- in which R' is a H atom or an alkyl functional group or aryl functional group having 1 to 12 C atoms, or an amide group, carbamate group, urea group, imino group, carboxylate group, carbamoyl group, amidino group, carbonate group, sulfonate group or sulfinate group.

3. The curable composition according to at least one of claims 1 and 2, **characterized in that** the functional groups X, Y, Z in the general formula (I) are each, independently of one another, a methyl group, an ethyl group, a methoxy group or an ethoxy group, at least one of the functional groups being a methoxy or ethoxy group.

4. The curable composition according to at least one of the preceding claims, **characterized in that** R in the general formula (I) is a methylene group, ethylene group or n-propylene group.

5. The curable composition according to at least one of the preceding claims, **characterized in that** the compound of the general formula (II) is a compound of the general formula (IV), 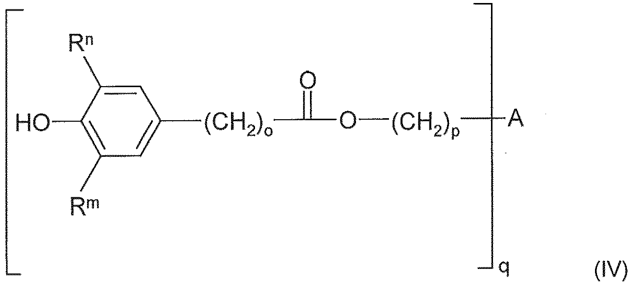 in which Rⁿ and R^{m} independently of one another are unsubstituted alkyl functional groups, at least one the functional groups Rⁿ and R^{m} containing at least four C atoms; o and p independently of one another being integers from 1 to 8; q being an integer from 2 to 4 and A being a q-valent organic functional group having 1 to 4 C atoms.

6. The curable composition according to at least one of the preceding claims, **characterized in that** at least two of the functional groups R⁴, R⁵, and R⁶ are each linear alkyl functional groups containing at least one thioether group.

7. The curable composition according to at least one of the preceding claims, **characterized in that** the composition contains the following components in the specified proportions by weight:
| | |
|---|---|
| at least one polymer having at least one terminal group of the general formula (I) | 10-60 wt.%, |
| at least one compound of the general formula (II) | 0.05-5 wt.%, |
| at least one compound of the general formula (III) | 0.05-5 wt.%, |
| one or more filler(s) | 10-70 wt.%, |
| one or more plasticizing agent(s) | 1 to 30 wt.%, |
| one or more auxiliary agent(s) | 0-10 wt.%, |
the proportions by weight adding up to 100 wt.% and the proportions by weight being based on the total weight of the curable composition.

8. The use of a curable composition according to at least one of the preceding claims as an adhesive, a sealant and/or a coating substance.

## Revendications

1. Composition durcissable, au moins contenant
A) au moins un polymère qui comporte au moins un groupe terminal de la formule générale (I) -Aₙ-R-SiXYZ (I), dans laquelle
A représente un groupe de liaison divalent qui contient au moins un hétéroatome,
R est un radical hydrocarboné divalent qui comporte 1 à 12 atomes de carbone, et
X, Y, Z sont des substituants sur l'atome Si et sont indépendamment des groupes alkyle en C₁ à C₈, alcoxy en C₁ à C₈, ou acyloxy en C₁ à C₈, au moins un des radicaux X, Y, Z est un groupe alcoxy en C₁ à C₈ ou acyloxy en C₁ à C₈, et
n est égal à 0 ou 1 ;
B) au moins un composé de la formule générale (II) 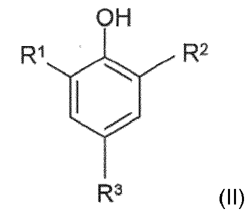 dans laquelle
R¹, R² et R³ sont indépendamment des radicaux organiques qui contiennent des radicaux alkyle non substitués ou au moins un hétéroatome et qui comportent au moins 10 atomes de carbone, les radicaux R¹, R² et R³ étant dépourvus de groupes thioéther ; et
C) au moins un composé de la formule générale (III) 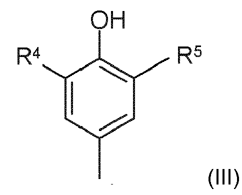 dans laquelle
R⁴, R⁵ et R⁶ représentent indépendamment des radicaux alkyle non substitué ou des radicaux alkyle linéaires qui contiennent au moins un groupe thioéther, au moins un des radicaux R⁴, R⁵ et R⁶ étant un radical alkyle linéaire qui contient au moins un groupe thioéther.

2. Composition durcissable selon la revendication 1, **caractérisée en ce que** le groupe de liaison divalent A dans la formule générale (I) est un atome d'oxygène, un groupe -NR'- R' étant un atome d'hydrogène ou un radical alkyle ou aryle ayant 1 à 12 atomes de carbone, ou un groupe amide, carbamate, urée, imino, carboxylate, carbamoyle, amidino, carbonate, sulfonate ou sulfinate.

3. Composition durcissable selon l'une des revendications 1 et 2, **caractérisée en ce que** les radicaux X, Y, Z dans la formule générale (I) sont chacun indépendamment un groupe méthyle, éthyle, méthoxy ou éthoxy, l'un au moins des radicaux est un groupe méthoxy ou éthoxy.

4. Composition durcissable selon l'une des revendications précédentes, **caractérisée en ce que** R dans la formule générale (I) est un groupe méthylène, éthylène ou n-propylène.

5. Composition durcissable selon l'une des revendications précédentes, **caractérisée en ce que** le composé de la formule générale (II) est un composé de la formule générale (IV) 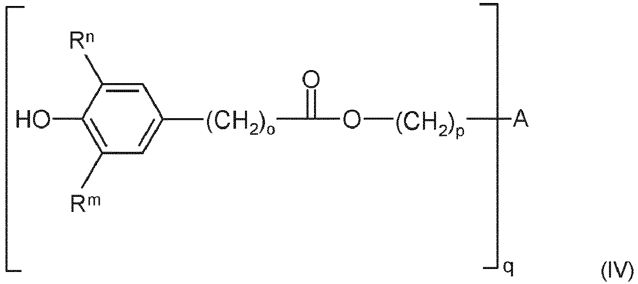 dans laquelle Rⁿ et R^{m} sont indépendamment un radical alkyle non substitué, l'un au moins des radicaux Rⁿ et R^{m} contenant au moins quatre atomes de carbone ; o et p sont indépendamment des nombres entiers de 1 à 8 ; q est un nombre entier de 2 à 4 et A est un radical organique de valence q ayant 1 à 4 atomes de carbone.

6. Composition durcissable selon l'une des revendications précédentes, **caractérisée en ce qu'**au moins deux des radicaux R⁴, R⁵ et R⁶ sont des radicaux alkyle linéaires qui contiennent au moins un groupe thioéther.

7. Composition durcissable selon l'une des revendications précédentes, **caractérisée en ce que** la composition contient les ingrédients suivants dans les proportions en poids indiquées :
| | |
|---|---|
| au moins un polymère comportant au moins un groupe terminal de la formule générale (I) | 10 à 60% en poids, |
| au moins un composé de la formule générale (II) | 0,05 à 5% en poids, |
| au moins un composé de la formule générale (III) | 0,05 à 5% en poids, |
| une ou plusieurs charges | 10 à 70% en poids, |
| un ou plusieurs plastifiants | 1 à 30% en poids, |
| un ou plusieurs auxiliaires | 0 à 10% en poids, |
les pourcentages en poids s'additionnant à 100% en poids et les pourcentages en poids étant rapportés au poids total de la composition durcissable.

8. Utilisation d'une composition durcissable selon au moins une des revendications précédentes comme matière adhésive, matière d'étanchéité et/ou matière de revêtement.
